(19) Europäisches Patentamt
European Patent Office
Office européen des brevets

(11) **EP 3 357 272 B1**

(12) **EUROPEAN PATENT SPECIFICATION**

(45) Date of publication and mention
of the grant of the patent:
**19.04.2023 Bulletin 2023/16**

(21) Application number: **16754284.4**

(22) Date of filing: **19.08.2016**

(51) International Patent Classification (IPC):
**H04W 24/02** *(2009.01)*     *H04W 24/04* *(2009.01)*

(52) Cooperative Patent Classification (CPC):
**H04W 24/02; H04W 24/04**

(86) International application number:
**PCT/EP2016/069745**

(87) International publication number:
**WO 2017/054986 (06.04.2017 Gazette 2017/14)**

(54) **CELLULAR TELECOMMUNICATIONS NETWORK**

ZELLULARES TELEKOMMUNIKATIONSNETZWERK

RÉSEAU DE TÉLÉCOMMUNICATIONS CELLULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2015 EP 15187067**

(43) Date of publication of application:
**08.08.2018 Bulletin 2018/32**

(73) Proprietor: **British Telecommunications public limited company**
**London E1 8EE (GB)**

(72) Inventors:
• **MACKENZIE, Richard**
**London EC4V 5BT (GB)**
• **FITCH, Michael**
**London EC4V 5BT (GB)**
• **TUKMANOV, Anvar**
**London EC4V 5BT (GB)**

(74) Representative: **British Telecommunications public limited company**
**Intellectual Property Department**
**9th Floor**
**One Braham**
**Braham Street**
**London E1 8EE (GB)**

(56) References cited:
**EP-A1- 2 271 142       WO-A1-2015/034775**
**US-A1- 2010 130 189**

**Description**

**Field of the Invention**

The present invention relates to a method, a non-transitory computer-readable storage medium, an apparatus and a cellular communications network for physical cell identifier conflicts detection and resolution.

**Background**

A base station in a cellular communications network is assigned both a Cell Global Identifier (CGI, known as eCGI in the 4th Generation (4G) Long Term Evolution (LTE) network) and a Physical Cell Identifier (PCI). The eCGI is an identifier used to uniquely identify the base station from any other base station in the world. The PCI is also used to identify a base station, but has the drawback that the 504 available PCIs are shared by several base stations. Nonetheless, there are a few advantages to using the PCI, rather than the eCGI, to identify a base station when a User Equipment (UE) is performing a scan for neighbouring base stations. For example, the PCI is a reference signal and therefore UEs may decode the PCI in a relatively short time (around 20ms for the PCI compared to around 160ms for the eCGI). Furthermore, while scanning for neighbouring base stations, the UE cannot transmit or receive data with its serving base station, so decoding the PCI rather than eCGI increases data throughput. The UE may also experience increased levels of service disruption by using the eCGI, for example if the UE is unable to decode the identifier in time for a successful handover, so the use of the PCI reduces this risk. Furthermore, the extra processing requirements to decode the eCGI places further demands on the battery of UEs. This last problem is particularly relevant for distributed cellular networks, such as femtocell networks, in which the UE needs to decode the identifiers on a more frequent basis.

A femtocell, also known as a Home evolved Node B (HeNB) is one of a class of base stations known as small cells, which further includes picocells, metrocells and microcells depending on the coverage area. It is intended to deploy HeNBs such that there is a much higher density of HeNBs compared to base stations of conventional cellular networks. This has the advantages of increased coverage and capacity for the cellular network. However, the limited number of PCI values and the likely self-organised nature of the femtocell means that such a deployment will result in PCI conflicts. A PCI conflict occurs when either a base station has a neighbour base station with the same PCI (a PCI collision) or when a base station has two neighbours having the same PCI (a PCI confusion). Both these forms of PCI conflict cause issues in the network. For example, if there is a PCI collision, then any UE connected to the serving base station can mistake transmissions of the conflicting base station with its own serving base station. This can cause various issues such as incorrect channel estimation, which can lead to an unstable connection and reduced data throughput. Furthermore, if there is a PCI confusion, the serving base station may not be able to command a UE to handover to one of the two base stations having the same PCI. If the serving base station is aware of the confusion then it can request the eCGI to distinguish between the two base stations and thus complete the handover. However, requesting the eCGI adds additional signalling and delays to mobility management.

These problems were relatively easy to avoid in conventional cellular networks as a relatively small number of base stations were used, each having a relatively large coverage area. Accordingly, PCIs for each base station were carefully planned by Mobile Network Operators (MNOs), and the chances of a PCI conflict were low. Femtocells are typically part of a Self-Organised Network (SON), such that the femtocell self-allocates its PCI rather than relying on a centralised network planning entity. This reduces the amount of control traffic in the network, but means that the chances of a PCI conflict occurring increase. Accordingly, femtocells must implement techniques to reduce these occurrences.

The majority of research into this issue has been into treating the femtocell network as a distributed autonomous system in which the algorithm used to select a PCI reduces the chances of a PCI conflict. However, there is relatively little research into the field of detecting a PCI conflict. Two methods known to the present inventors will now be discussed.

A first method is via the Automatic Neighbour Relation (ANR) process. In ANR, a base station populates a Neighbour Relation Table (NRT) with details of neighbouring base stations, including their PCI and eCGI values. When a base station discovers a new neighbour base station, the two base stations can exchange NRTs. As a result the base station determines the identities of the neighbouring base stations of that neighbour base station. If the base station detects that it has the same PCI as one of the neighbouring base stations of that neighbour base station, then it has detected a PCI confusion. It is not known whether these two base stations may have a PCI collision with each other, as it is not known whether their coverage areas overlap.

Article, "LTE Small Cell SON Test Cases", published by Qualcomm Technologies, Inc. and retrieved from https://www.qualcomm.com/documents/lte-small-cell-son-test-cases on 27 August 2015, discloses several test cases for automated configuration of the PCI. In this article, it is disclosed that a PCI collision can be detected when a UE moves between the coverage areas of the first and second base station. However, this requires the UE to have an active data session in order to detect the collision and the two base stations must be synchronised and have overlapping coverage.

International patent application publication number 2015/034775 A1 discloses a method and apparatus for communication at a network entity comprising receiving from a user equipment one or more technology layer measurements of signals received from a neighbouring cell during a measurement period. The methods and apparatus further comprise determining that a first subset of the one or more technology layer measurements satisfies an adequate user equipment (UE) communication condition. In addition, the methods and apparatus comprise determining that a second subset of the one or more technology layer measurements satisfies at least one measurement threshold value. Moreover, the methods and apparatus comprise identifying a network entity conflict, i.e. PCI conflict or confusion, when the first subset of the one or more technology layer measurements satisfies the adequate UE communication condition and the second subset of the one or more technology layer measurements satisfies the at least one measurement threshold value

It is therefore desirable to alleviate some or all of the above problems. In particular, it is desirable to provide a method of PCI collision detection for base stations that is applicable for non-synchronised base stations It is also desirable to detect such PCI collisions before it causes a significant level of interference in the network.

**Summary of the Invention**

According to a first aspect of the invention, there is provided a method as claimed in Claim 1.

The present inventors have realised that when two base stations are not synchronised in a cellular communications network but have overlapping coverage areas and the same Physical Cell Identifier (PCI), a UE in this overlapping coverage area may experience periodic rises in block error rate. Accordingly, the present invention may analyse the block error rate to determine if there are a threshold number of spikes of block error rate in a predetermined time period, and, if so, initiate a PCI conflict resolution operation. The present invention therefore reduces the number of PCI collisions for cellular communications networks including non-synchronised base stations, which may be common in those including femtocells.

Furthermore, the present invention is more likely to identify a PCI collision before there is a significant disruption to service. For example, if the two base stations become synchronised at a later time, then the PCI collision would cause serious issues for all UEs connected to those base stations. However, with the present method of detecting a PCI collision when the base stations are not synchronised, the PCI values may be changed before this occurs.

The method may further comprise the steps of receiving signal quality data relating to a quality of signals received at the UE, wherein each block error rate event is an instance of the block error rate exceeding the first threshold value when the quality of signals received at the UE is above a third threshold value. In this manner, any rise in block error rate which is caused by poor signal quality may be disregarded as these incidents are unlikely to be due to a PCI collision.

The method may further comprise the step of analysing the block error rate data to determine a periodicity of the number of block error rate events. The periodicity of the block error rate events, which correlates with the periodicity of the intermittent synchronisation of the two base stations, may be determined. This information may be used to re-synchronise the base stations. This information may also be used to ensure that any PCI reselection operation (which may be a result of the detected intermittent PCI collisions) occurs whilst the two base stations are not aligned. This allows the base station to send any control messages to the UE more reliably, reducing any disruption caused during the PCI reselection.

The method may further comprise the steps of: monitoring the data rate between the UE and the first base station; and analysing the block error rate data and the data rate data to determine the periodicity of the number of block error rate events. As the block error rate spikes only occur when there is an active data session between the base station and the UE, the method may take the data rate into account when determining the periodicity of block error rate spikes. This may give a more accurate determination of the periodicity of both the block error rate spikes and the intermittent synchronisation of the two base stations. The block error rate data may relate to a plurality of connections between a plurality of UEs and the first base station; the signal quality data may relate to the quality of signals received by a plurality of UEs; and/or the data rate data may relate to the data rate between a plurality of UEs and the first base station.

According to a second aspect of the invention, there is provided a non-transitory computer-readable storage medium as claimed in Claim 7.

According to a third aspect of the invention, there is provided an apparatus as claimed in Claim 8.

The receiver may be further adapted to receive signal quality data relating to a quality of signals between the UE and the first base station, wherein each block error rate event is an instance of the block error rate exceeding the first threshold value when the quality of signals received at the UE is above a third threshold value.

The processor may be further adapted to analyse the block error rate data to determine a periodicity of the number of block error rate events.

The receiver may be further adapted to receive data rate data of the data rate between the UE and the first base station, and the processor may be adapted to analyse the block error rate data and the data rate data to determine the periodicity of the number of block error rate events.

The apparatus may be one of the first base station, another base station in the cellular communications network, the UE, or a remote node.

According to a fourth aspect of the invention, there is provided a cellular network as claimed in Claim 14.

**Brief Description of the Figures**

In order that the present invention may be better understood, embodiments thereof will now be described, by way of example only, with reference to the accompanying drawings in which:

Figure 1 is a schematic diagram of an embodiment of a cellular communications network of the present invention;
Figure 2 is a schematic diagram of a base station of the network of Figure 1;
Figure 3 is a schematic diagram of a User Equipment (UE) of the network of Figure 1;
Figure 4 is a flow diagram illustrating an embodiment of a method of the present invention; and
Figure 5 is a graph representing the change in synchronisation offset, data rate, signal quality and block error rate over time.

**Detailed Description of Embodiments**

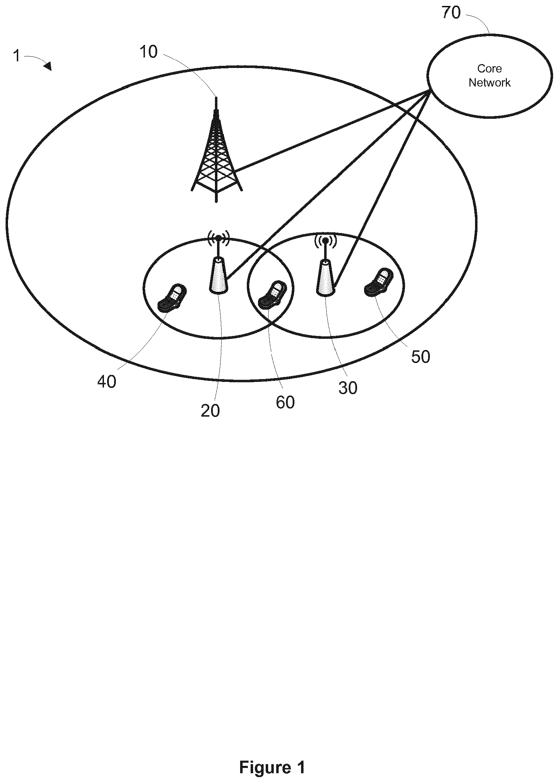

A first embodiment of a cellular communications network 1 of the present invention will now be described with reference to Figures 1 to 3. As shown in Figure 1, the cellular communications network 1 includes a macro base station 10, a first and second femto base station (hereinafter known as the first and second HeNB) 20, 30, and a first, second and third User Equipment (UE) 40, 50, 60. The macro base station 10 and first and second HeNBs 20, 30 are connected via respective backhaul connections to a Core Network (CN) 70, which includes various modules of the Mobile Network Operator (MNO) such as the Mobility Management Entity and the Accounting, Authentication and Authorisation entity, and includes onward connections to external networks such as the Internet.

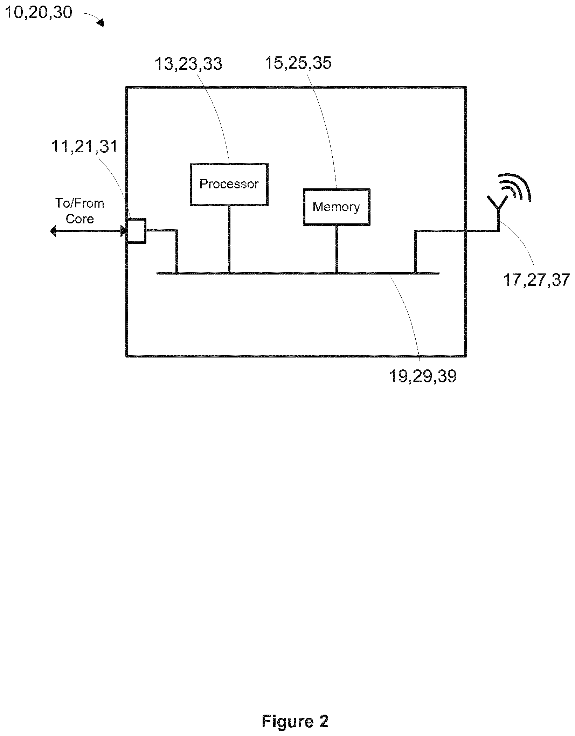

A schematic diagram illustrating the macro base station 10 and the first and second HeNBs 20, 30 is shown in Figure 2. The skilled person will understand that there may be several physical differences between the construction of a macro base station and a HeNB, but Figure 2 illustrates the various constituent parts of each which may be of a particular form depending on the deployment scenario. The macro base station 10 and first and second HeNBs 20, 30 each include a first transceiver 11, 21, 31, a processor 13, 23, 33, memory 15, 25, 35 and a second transceiver 17, 27, 37, all connected via a bus 19, 29, 39. The first transceivers 11, 12, 31 are commonly known as the backhaul connection and are used for transmissions to and from the CN 70, which would be a carrier-grade Ethernet or optical fibre connection for the macro base station 10 and typically a Digital Subscriber Line or optical fibre connection for a HeNB. The second transceivers 17, 27, 37 are an antenna configured for cellular communications (in this embodiment, via the 4G LTE protocol). The processors 13, 23, 33 typically process data packets received via the first transceivers 11, 21, 31 or second transceivers 17, 27, 37 such that they are in a form to be transmitted to their destination (for example, IP data packets received at the first transceiver 11 of the macro base station 10 from the CN 70 may be processed into Transport Blocks (TBs) by the processor 13 for onward transmission to a UE via the second transceiver 17, which may be temporarily stored in a buffer in memory 15).

In this embodiment, the macro base station 10 and first and second HeNBs 20, 30 are configured to store data relating to the data rate for each UE in memory 15, 25, 35. This will be stored for a particular period of measurement, which will become clear later in the description.

The macro base station 10 and first and second HeNBs 20, 30 are also configured to receive measurement reports from any of its connected UEs via their second transceivers 17, 27, 37. These measurement reports, which will be described in more detail below, are stored in memory 15, 25, 35. Furthermore, the macro base station 10 and first and second HeNBs 20, 30 are also configured to receive acknowledgement messages from any of its connected UEs via their second transceivers 17, 27, 37. These acknowledgement messages indicate whether a TB was successfully or unsuccessfully received by the UE. These acknowledgement messages, which will also be described in more detail below, are stored in memory 15, 25, 35.

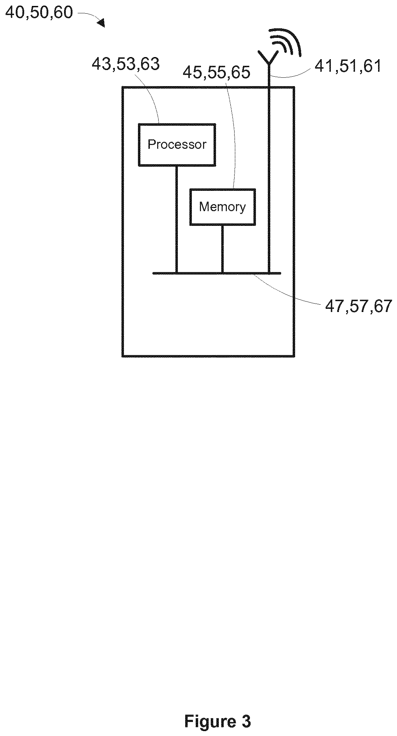

A schematic diagram illustrating the first, second and third UE 40, 50, 60 is shown in Figure 3. Again, the skilled person will understand that there may be several physical differences between the first, second and third UEs, but Figure 3 illustrates the various constituent parts of each which may be of a particular form depending on the particular UE. The first, second and third UEs 40, 50, 60 each include a first transceiver 41, 51, 61 (i.e. an antenna), for transmitting and receiving signals with the macro base station 10, the first and second HeNBs 20, 30, and with other UEs (in this embodiment, via the 4G LTE protocol). The first, second and third UEs 40, 50, 60 also include a processor 43, 53, 63 and memory 45, 55, 65 connected via a bus 47, 57, 67. Typically, the UEs 40, 50, 60 include a display and Human Interface Device (HID), such as a keypad or touchscreen, which are not shown in Figure 3.

When each UE 40, 50, 60 is connected to a serving base station, the first transceivers 41, 51, 61 are their respective processors 43, 53, 63 are configured to measure its radio environment and compile a measurement report. This is typically performed in response to a measurement configuration message from the serving base station, which configures the UE 40, 50, 60 to measure channel conditions with the serving base station and/or any neighbouring base stations (such as Reference Signal Received Power (RSRP), buffer status, etc.). This information is compiled in the UE 40, 50, 60 by processors 43, 53, 63, and then sent to the serving base station via the first transceivers 41, 51, 61 (and may be temporarily stored in memory 45, 55, 65). Furthermore, each UE 40, 50, 60 is configured to send acknowledgement messages to the serving base station. In this embodiment, each UE 40, 50, 60 receives a TB, calculates a Cyclic Redundancy Check (CRC) value, and checks if this matches the CRC value sent with the TB. If it does match, then the acknowledgment message indicates that the transfer was successful. If it doesn't match, then the acknowledgement message indicates that the transfer was unsuccessful.

The Block Error Rate (BLER) will now be described. BLER is a Key Performance Indicator (KPI) of channel quality in a cellular data packet network, and relates to the proportion of all blocks transmitted over the air interface which contain an error. More specifically, the BLER is calculated by comparing the number of Transport Blocks transmitted over the air interface between the base station and the UE which contain an error to the total number of Transport Blocks over a given time period. As noted above, in this embodiment a Transport Block error is recorded each time the receiver-calculated CRC value doesn't match the CRC value sent with the Transport Block. The BLER can be calculated for both the downlink and uplink. The base station may determine the number of uplink Transport Block errors, and thus the uplink BLER, directly. The base station also determines the number of downlink Transport Block errors (by referring to the received acknowledgement messages indicating that the Transport Block contained an error) and thus also calculates the downlink BLER. The Block Error Rate calculation is summarised in the following equation:

$$Block\ Error\ Rate\ (BLER) = \frac{\sum Transport\ Blocks\ with\ CRCError}{\sum Transport\ Blocks}$$

Accordingly, the serving base station may compute the BLER for each UE in both the uplink and downlink, which may then be stored in memory and analysed by the processor.

Turning back to Figure 1, the first UE 40 is positioned within the coverage areas of both the macro base station 10 and the first HeNB 20. In this example, the first macro base station 10 and the first HeNB 20 are synchronised such that each frame is transmitted at the same time and the duration between two frames is the same. This could potentially result in interference issues. However, in this example, this is mitigated by the first macro base station 10 and the first HeNB 20 using different PCI values.

Furthermore, the second UE 50 is positioned within the coverage areas of both the macro base station and the second HeNB 30. In this example, the first macro base station 10 and the second HeNB 30 are not synchronised, and this may again result in interference issues. However, in this example, this is similarly mitigated by the first macro base station 10 the second HeNB 30 using different PCI values.

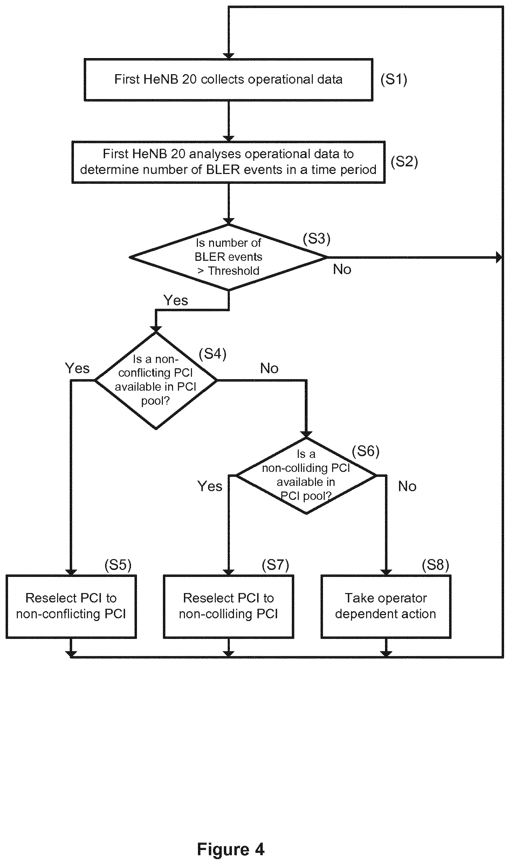

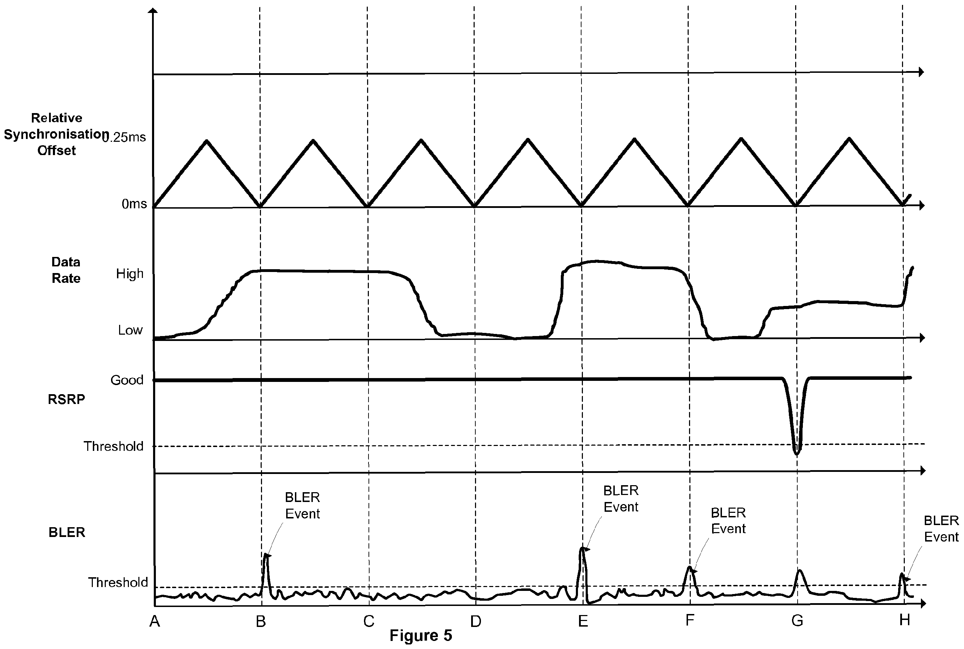

The third UE 60 is positioned within the coverage areas of the macro base station and the first and second HeNBs 20, 30. As noted above, the macro base station 10 is synchronised with the first HeNB 20 but not with the second HeNB 30. The first and second HeNB 20, 30 are not synchronised. In this embodiment, the third UE 60 is connected to the first HeNB 20. There is no interference caused by signals from the macro base station 10 on this connection because, as noted above, the macro base station 10 uses a different PCI to the first HeNB 20. However, interference may be caused by signals from the second HeNB 30, as the first and second HeNB 20, 30 use the same PCI. To mitigate this, the first HeNB 20 and third UE 60 implement an embodiment of a method of the present invention in order to detect the PCI collision and resolve it, which will now be described with reference to Figures 4 and 5.

As a first step (S1 on Figure 4), the first HeNB 20 collects operational data on its connection with the third UE 60. In this embodiment, the first HeNB 20 collects three forms of operational data. Firstly, the first HeNB 20 collects data relating to the data rate for all downlink traffic to the third UE 60 over a particular time period (the "data collection period"). This may be achieved by the processor 23 implementing a monitoring function to monitor the number of Transport Blocks being sent by the second transceiver 27 to the third UE 60, recording their sizes and the time of transmission, over the data collection period. This data is stored in memory 25. Secondly, the processor 23 also receives and analyses the acknowledgement messages received from the third UE 60 to determine the downlink BLER for the data collection period. This is also stored in memory 25. Thirdly, the first HeNB 20 sends a measurement configuration message to the third UE 60 instructing it to prepare a measurement report including the RSRP (calculated using any conventional method) over the same data collection time period. This is reported to the first HeNB 20, and stored in memory 25.

Accordingly, the first HeNB 20 collects data rate, RSRP and BLER data for a particular time period. In step S2 of Figure 4, this data is analysed to determine when the BLER rises above a threshold amount (a "BLER event"), and, in step S3, if the number of these BLER events exceeds a threshold amount in a predetermined time period. The present inventors have discovered that this is an indication that the serving base station has a PCI conflict with another base station. An example data analysis of the data will now be described with reference to Figure 5.

Figure 5 is a graph representing the fluctuation of the synchronisation offset between the first and second HeNB, the data rate, the BLER, and the RSRP over the data collection period. Various points along the time axis, A to H, have been highlighted for the purposes of this description.

As shown in the graph, the synchronisation offset between the first and second HeNB 20, 30 varies over time. A simple example will be given for the purposes of this description. The first and second HeNBs 20, 30 are both transmitting frames having the same pattern of reference signals, but the time offset between a frame from the first HeNB 20 relative to a frame from the second HeNB 30 increases over time. At point A on Figure 5 a frame from the first HeNB 20 has no time offset to a frame from the second HeNB 30. However, following point A, the time offset for each subsequent frame from the first HeNB 20 relative to a frame of the second HeNB 30 increases up to 0.25ms. At this point, the time offset of a frame from the first HeNB 20 relative to a frame of the second HeNB 30 is the same as the time offset relative to a neighbouring frame of the second HeNB 30. Following this intermediate point, the time offset for each subsequent frame decreases down to 0 (at point B), at which point the time offset of a frame from the first HeNB 20 is aligned with the neighbouring frame. Accordingly, the time offset between transmissions of the first and second HeNBs 20, 30 vary in a triangular fashion between the various points A to H, such that frames from the first and second HeNBs 20, 30 are aligned for at least one transmission at each of points A to H. The skilled person will understand that the synchronisation offset between the first and second HeNB 20, 30 may be more complicated than that depicted in Figure 5, but the above example is used for simplicity.

The three other parts of the graph of Figure 5 are all representative of the data contained in memory 25 on the first HeNB 20, including the data rate, RSRP and BLER. The BLER and RSRP data are analysed by the processor 23 in the following manner. The processor 23 analyses the BLER over the time period to determine if the BLER rises above a threshold amount. As shown in Figure 5, the BLER rises above this threshold amount (represented by a dashed line) five times at points B, E, F, G and H. The processor 23 then analyses the RSRP at the time of each of these BLER spikes to determine if the RSRP was above a threshold amount at that time. If so, then the processor 23 records a BLER event. If not (i.e. the RSRP is below the threshold indicating that the signal quality was relatively poor), then the processor 23 does not record a BLER event. Accordingly, as shown in Figure 5, there are four BLER events at points B, E, F and H. The rise in BLER at point G is not recorded as a BLER event as the RSRP drops below the threshold amount at this time. The reasoning why these BLER events are recorded is discussed below.

As noted above, the processor 23 determines whether the number of these BLER events exceeds a threshold amount in a predetermined time period (step S3 of Figure 4). This exact method to make this determination and the exact values that should be used for the threshold number and the length of the time period can vary on implementation, but will be clear based on the following observations.

As shown in Figure 5, the UE may experience a relatively high BLER when the following conditions are met: the UE is receiving data, the UE is in the coverage areas of both a serving base station and another base station, and the serving base station and other base station are synchronised. Thus, as these two base stations are not synchronised, but instead drift in and out of synchronisation, there are spikes in the BLER. If one discounts the BLER spikes which are caused by poor signal (hence why the spike at point G is not counted as a BLER event), then spikes which are only a result of a PCI conflict with another base station with overlapping coverage areas are discovered.

These BLER events will typically be periodic in nature given that any clock drift between two base stations is likely to be regular. Accordingly, the processor 23 may determine that there is a periodicity between BLER spikes and thus detect a PCI conflict. However, a data session must be active for a BLER spike to occur, which is a result of user behaviour and thus random in nature, so the spikes may not meticulously follow the periodicity. The processor 23 may therefore only look at time periods during which there was an active data session and determine if there is a periodicity to the spikes in this time period.

Furthermore, some cellular technologies define several reference signal patterns which may be used in any frame. Accordingly, a base station may switch to a different reference signal pattern, which will reduce the number of BLER events occurring. This would also affect the periodicity of the BLER events.

Thus, in a more general sense, the processor 23 is configured to monitor the number of BLER events occurring over a predetermined time period. If this number exceeds a threshold (whether or not there is a clear periodicity to it), then the processor 23 records a PCI conflict. The length of this predetermined time period can also vary on application, but shouldn't be too short that it is unlikely to record several BLER events, or too long that the base station may not react in a timely manner to a PCI conflict. In the example shown in Figure 5, the threshold is set at three BLER events in a three hour period (as the timescale of multiple BLER events is in the region of several hours or even several days). Accordingly, in the three hour period from points E to H in Figure 5, there are three BLER events and the base station records a PCI conflict.

Once the first HeNB 20 has recorded a PCI conflict, it then initiates a PCI conflict resolution process. In this embodiment, this is achieved in the following manner. In step S4 of Figure 4, the first HeNB 20 determines if there is a non-conflicting PCI available. This may be achieved by analysing the Neighbour Relations Table (NRT) to determine if there are any PCIs that would not result in a conflict with other base stations. If so, then the first HenB 20 can select one of the non-conflicting PCIs and reconfigure its transmissions accordingly (step S5).

If there are no PCIs available that would not avoid conflict, then the first HeNB 20 determines if any PCIs are available that would at least avoid a collision (step S6). If so, then the first HeNB 20 can select one of these PCIs and reconfigure its transmissions accordingly (step S7). If this is not possible, then, in step S8, the first HeHB 20 may take operator dependent action. In this embodiment, this action is to choose a PCI which follows one of the following rules (in order): to avoid all conflicts, to avoid all conflicts expect mod 30, avoid all conflicts except mod 30 and mod 6, avoid all conflicts except mod 30, mod 6 and mod 3, and avoid all conflicts except mod 30, mod 6, mod 3 and confusions. In other examples of operator dependent action, the base station may be turned off, the MNO may allocate additional PCIs that weren't part of an initial PCI pool, the base station's power output may be reduced to avoid overlapping coverage areas. Furthermore, the base station may be allowed to continue to operate with the current PCI, but the KPIs may be more closely monitored to determine whether or not a PCI conflict resolution process should be initiated.

The method then loops back to step S1, in which the first HeNB 20 collects operational data on its connection with the third UE 60. The data collection step may be initiated periodically, or may be in response to a particular measurement (e.g. the BLER rising above the threshold amount to be a candidate BLER event).

In the above embodiments, the UE reports data back to the base station, and the base station performs the analysis to detect a PCI collision. However, the skilled person will understand that this is not the only way the invention may be implemented. For example, the UE may perform the analysis on whether the BLER indicates that the serving base station has a PCI conflict with another (non-synchronised) base station, and, if so, may send a message to the serving base station and/or other base station indicating that the PCI collsion exists. Furthermore, the data may be transferred and analysed by any entity in the cellular network, including a centralised node, which may then instruct base stations to reselect their PCIs.

Furthermore, the skilled person will understand that the only data that needs to be analysed in order to detect a PCI conflict is the BLER data. However, in the embodiments above, the data rate and RSRP are also analysed. Analysing the RSRP data allows any BLER spike caused by poor signal quality, rather than due to a PCI conflict, to be discounted. Removing these false positives means that a PCI conflict is only detected when there are a threshold amount of BLER spikes caused by PCI conflicts. Furthermore, the data rate analysis means that the periodicity of any BLER spikes may be determined more accurately, as the portions of data in which one would expect BLER spikes to occur can be determined.

The skilled person will also understand that the particular conflict resolution process detailed above is non-essential. Accordingly, once a PCI conflict has been detected, it may be resolved in any suitable manner.

The skilled person will also understand that during a BLER event there may be a number of BLER spikes. This can occur when the two base stations become aligned for a period of time but the UE is intermittently within the overlapping coverage area and/or receiving data. These multiple BLER spikes should be preferentially be recorded as a single BLER event.

Furthermore, the skilled person will understand that it is not essential for the BLER data to relate to a single UE. That is, the base station may record the BLER (and preferentially the data rate and RSRP) for a plurality of connections between UEs and the base station during a data collection period, and analyse the data for one or more of these UEs to determine if a predetermined number of BLER events occur in a predetermined time period.

The skilled person will understand that any combination of features is possible within the scope of the invention, as claimed.

**Claims**

1. A method performed by an apparatus in a cellular communications network, the method comprising the steps of:

    analysing block error rate data, the block error rate data relating to a connection between a User Equipment, UE, (60) and a first base station (20) in a cellular communications network;
    wherein the block error rate data is analysed to determine a number of block error rate events, each block error rate event of the number of block error rate events being an instance of the block error rate exceeding a first threshold value, and the method further comprising the steps of:

        determining whether the number of block error rate events in a predetermined time period exceeds a second threshold value; and, if so,
        performing a physical cell identifier conflict resolution operation.

2. A method as claimed in Claim 1, further comprising the step of:

receiving signal quality data relating to a quality of signals received at the UE (60),
wherein each block error rate event is an instance of the block error rate exceeding the first threshold value when the quality of signals received at the UE is above a third threshold value.

3. A method as claimed in either Claim 1 or Claim 2, further comprising the step of:
analysing the block error rate data to determine a periodicity of the number of block error rate events.

4. A method as claimed in Claim 3, further comprising the step of:

monitoring the data rate between the UE (60) and the first base station (20); and
analysing the block error rate data and the data rate data to determine the periodicity of the plurality of block error rate events.

5. A method as claimed in any one of the preceding claims, wherein the block error rate data relates to a plurality of connections between a plurality of UEs and the first base station; the signal quality data relates to the quality of signals received by a plurality of UEs; and/or the data rate data relates to the data rate between a plurality of UEs and the first base station.

6. A method as claimed in any one of the preceding claims, wherein the cellular communications network includes a second base station, and the first and second base station are periodically synchronised.

7. A non-transitory computer-readable storage medium storing a computer program or suite of computer programs which upon execution by a computer system of an apparatus in a cellular communications network, causes the apparatus to perform the method of any one of the preceding claims.

8. Apparatus in a cellular communications network comprising a processor adapted to

analyse block error rate data, the block error rate data relating to the block error rate between a User Equipment, UE, (60) and a first base station (20) in the cellular communications network, wherein the block error rate data is analysed to determine a number of block error rate events, each block error rate event of the number of block error rate events being an instance of the block error rate exceeding a first threshold value; and the processor being further **characterised by** being adapted to
determine whether the number of block error rate events in a predetermined time period exceeds a second threshold value; and, if so, initiate a physical cell identifier conflict resolution operation.

9. Apparatus as claimed in Claim 8, further comprising a receiver, wherein the receiver is adapted to receive signal quality data relating to a quality of signals between the UE (60) and the first base station (20), wherein each block error rate event is an instance of the block error rate exceeding the first threshold value when the quality of signals received at the UE (60) is above a third threshold value.

10. Apparatus as claimed in either Claim 8 or Claim 9, wherein the processor is further adapted to analyse the block error rate data to determine a periodicity of the number of block error rate events.

11. Apparatus as claimed in Claim 10, wherein the processor is further adapted to monitor the data rate between the first base station (20) and the UE (60), and is further adapted to analyse the block error rate data and the data rate data to determine the periodicity of the number of block error rate events.

12. Apparatus as claimed in any one of Claims 8 to 11, wherein the block error rate data relates to a plurality of connections between a plurality of UEs and the first base station; the signal quality data relates to the quality of signals received by a plurality of UEs; and/or the data rate data relates to the data rate between a plurality of UEs and the first base station.

13. Apparatus as claimed in any one of Claims 8 to 12, being one of the first base station (20), another base station (10, 30) in the cellular communications network, the UE (60), or a remote node.

14. A cellular communications network including the apparatus of any one of Claims 8 to 13.

**Patentansprüche**

1. Verfahren, durchgeführt von einer Vorrichtung in einem zellularen Kommunikationsnetzwerk, wobei das Verfahren die folgenden Schritte umfasst:

   Analysieren von Blockfehlerratendaten, wobei sich die Blockfehlerratendaten auf eine Verbindung zwischen einem Benutzergerät, UE, (60) und einer ersten Basisstation (20) in einem zellularen Kommunikationsnetzwerk beziehen;
   wobei die Blockfehlerratendaten analysiert werden, um eine Anzahl von Blockfehlerratenereignissen zu bestimmen, wobei jedes Blockfehlerratenereignis der Anzahl von Blockfehlerratenereignissen ein Fall ist, in dem die Blockfehlerrate einen ersten Schwellenwert überschreitet, und das Verfahren ferner die folgenden Schritte umfasst:
   Bestimmen, ob die Anzahl der Blockfehlerratenereignisse in einer vorbestimmten Zeitspanne einen zweiten Schwellenwert übersteigt; und, falls dies der Fall ist, Durchführen einer Konfliktlösungsoperation für den Identifikator der physikalischen Zelle.

2. Verfahren nach Anspruch 1, das ferner den folgenden Schritt umfasst:
   Empfangen von Signalqualitätsdaten, die sich auf die Qualität der an dem UE (60) empfangenen Signale beziehen, wobei jedes Blockfehlerratenereignis ein Fall ist, in dem die Blockfehlerrate den ersten Schwellenwert überschreitet, wenn die Qualität der an dem UE empfangenen Signale über einem dritten Schwellenwert liegt.

3. Verfahren nach Anspruch 1 oder Anspruch 2, das ferner den folgenden Schritt umfasst:
   Analysieren der Blockfehlerratendaten, um eine Periodizität der Anzahl der Blockfehlerratenereignisse zu bestimmen.

4. Verfahren nach Anspruch 3, das ferner den folgenden Schritt umfasst:
   Überwachen der Datenrate zwischen dem UE (60) und der ersten Basisstation (20); und Analysieren der Blockfehlerratendaten und der Datenratendaten, um die Periodizität der Mehrzahl von Blockfehlerratenereignissen zu bestimmen.

5. Verfahren nach einem der vorhergehenden Ansprüche, wobei die Blockfehlerratendaten sich auf eine Mehrzahl von Verbindungen zwischen einer Mehrzahl von UEs und der ersten Basisstation beziehen; die Signalqualitätsdaten sich auf die Qualität der durch eine Mehrzahl von UEs empfangenen Signale beziehen; und/oder die Datenratendaten sich auf die Datenrate zwischen einer Mehrzahl von UEs und der ersten Basisstation beziehen.

6. Verfahren nach einem der vorhergehenden Ansprüche, wobei das zellulare Kommunikationsnetzwerk eine zweite Basisstation beinhaltet und die erste und zweite Basisstation periodisch synchronisiert werden.

7. Nichtflüchtiges computerlesbares Speichermedium, das ein Computerprogramm oder eine Suite von Computerprogrammen speichert, die beim Ausführen durch ein Computersystem einer Vorrichtung in einem zellularen Kommunikationsnetzwerk die Vorrichtung veranlasst, das Verfahren nach einem der vorhergehenden Ansprüche durchzuführen.

8. Vorrichtung in einem zellularen Kommunikationsnetzwerk, das einen Prozessor umfasst, der angepasst ist, um

   Blockfehlerratendaten zu analysieren, wobei sich die Blockfehlerratendaten auf die Blockfehlerrate zwischen einem Benutzergerät, UE, (60) und einer ersten Basisstation (20) in dem zellularen Kommunikationsnetzwerk beziehen, wobei die Blockfehlerratendaten analysiert werden, um eine Anzahl von Blockfehlerratenereignissen zu bestimmen, wobei jedes Blockfehlerratenereignis der Anzahl von Blockfehlerratenereignissen ein Fall ist, in dem die Blockfehlerrate einen ersten Schwellenwert überschreitet; und der Prozessor ferner **dadurch gekennzeichnet ist, dass** er angepasst ist, um
   zu bestimmen, ob die Anzahl der Blockfehlerratenereignisse in einer vorbestimmten Zeitspanne einen zweiten Schwellenwert übersteigt; und, falls dies der Fall ist,
   einen Konfliktlösungsvorgang für den Identifikator der physischen Zelle einzuleiten.

9. Vorrichtung nach Anspruch 8, die ferner einen Empfänger umfasst, wobei der Empfänger angepasst ist, um Signalqualitätsdaten zu empfangen, die sich auf eine Qualität von Signalen zwischen dem UE (60) und der ersten Basisstation (20) beziehen, wobei jedes Blockfehlerratenereignis ein Fall ist, in dem die Blockfehlerrate den ersten Schwellenwert überschreitet, wenn die Qualität der an dem UE (60) empfangenen Signale über einem dritten Schwellenwert liegt.

**10.** Vorrichtung nach Anspruch 8 oder 9, wobei der Prozessor ferner angepasst ist, die Blockfehlerratendaten zu analysieren, um eine Periodizität der Anzahl der Blockfehlerratenereignisse zu bestimmen.

**11.** Vorrichtung nach Anspruch 10, wobei der Prozessor ferner angepasst ist, um die Datenrate zwischen der ersten Basisstation (20) und dem UE (60) zu überwachen, und ferner angepasst ist, um die Blockfehlerratendaten und die Datenratendaten zu analysieren, um die Periodizität der Anzahl von Blockfehlerratenereignissen zu bestimmen.

**12.** Vorrichtung nach einem der Ansprüche 8 bis 11, wobei die Blockfehlerratendaten sich auf eine Mehrzahl von Verbindungen zwischen einer Mehrzahl von UEs und der ersten Basisstation beziehen; die Signalqualitätsdaten sich auf die Qualität der durch eine Mehrzahl von UEs empfangenen Signale beziehen; und/oder die Datenratendaten sich auf die Datenrate zwischen einer Mehrzahl von UEs und der ersten Basisstation beziehen.

**13.** Vorrichtung nach einem der Ansprüche 8 bis 12, die entweder die erste Basisstation (20), eine andere Basisstation (10, 30) im zellularen Kommunikationsnetzwerk, das UE (60) oder ein entfernter Knoten ist.

**14.** Zellulares Kommunikationsnetzwerk, das die Vorrichtung nach einem der Ansprüche 8 bis 13 beinhaltet.

**Revendications**

**1.** Procédé exécuté par un appareil dans un réseau de communication cellulaire, le procédé comprenant les étapes consistant à :

analyser des données de taux d'erreur de blocs, les données de taux d'erreur de blocs concernant une connexion entre un équipement utilisateur, UE (60), et
une première station de base (20) dans un réseau de communication cellulaire ;
les données de taux d'erreur de blocs étant analysées pour déterminer un nombre d'événements de taux d'erreur de blocs, chaque événement de taux d'erreur de blocs du nombre d'événements de taux d'erreur de blocs étant une instance du taux d'erreur de blocs dépassant une première valeur de seuil, et le procédé comprenant en outre les étapes consistant à :

déterminer si le nombre d'événements de taux d'erreur de blocs dans une période de temps prédéterminée dépasse une deuxième valeur de seuil ; et si c'est le cas,
exécuter une opération de résolution de conflit d'identifiant de cellule physique.

**2.** Procédé selon la revendication 1, comprenant en outre l'étape consistant à :
recevoir des données de qualité de signal concernant une qualité de signaux reçus au niveau de l'UE (60), chaque événement de taux d'erreur de blocs étant une instance du taux d'erreur de blocs dépassant la première valeur de seuil lorsque la qualité de signaux reçus au niveau de l'UE est au-dessus d'une troisième valeur de seuil.

**3.** Procédé selon soit la revendication 1, soit la revendication 2, comprenant en outre l'étape consistant à :
analyser les données de taux d'erreur de blocs pour déterminer une périodicité du nombre d'événements de taux d'erreur de blocs.

**4.** Procédé selon la revendication 3, comprenant en outre l'étape consistant à :

surveiller le débit de données entre l'UE (60) et la première station de base (20) ; et
analyser les données de taux d'erreur de blocs et les données de débit de données pour déterminer la périodicité de la pluralité d'événements de taux d'erreur de blocs.

**5.** Procédé selon l'une quelconque des revendications précédentes, les données de taux d'erreur de blocs concernant une pluralité de connexions entre une pluralité d'UE et la première station de base ; les données de qualité de signal concernant la qualité de signaux reçus par une pluralité d'UE ; et/ou les données de débit de données concernant le débit de données entre une pluralité d'UE et la première station de base.

**6.** Procédé selon l'une quelconque des revendications précédentes, le réseau de communication cellulaire incluant une deuxième station de base, et la première et la deuxième station de base étant synchronisées périodiquement.

**7.** Support de stockage lisible par ordinateur non transitoire stockant un programme informatique ou une suite de programmes informatiques qui, lors de l'exécution par un système informatique d'un appareil dans un réseau de communication cellulaire, amène l'appareil à exécuter le procédé selon l'une quelconque des revendications précédentes.

**8.** Appareil dans un réseau de communication cellulaire comprenant :
un processeur adapté pour :
analyser des données de taux d'erreur de blocs, les données de taux d'erreur de blocs concernant le taux d'erreur de blocs entre un équipement utilisateur, UE (60), et une première station de base (20) dans le réseau de communication cellulaire, les données de taux d'erreur de blocs étant analysées pour déterminer un nombre d'événements de taux d'erreur de blocs, chaque événement de taux d'erreur de blocs du nombre d'événements de taux d'erreur de blocs étant une instance du taux d'erreur de blocs dépassant une première valeur de seuil ; et le processeur étant **caractérisé en outre en ce qu'**il est adapté pour :

déterminer si le nombre d'événements de taux d'erreur de blocs dans une période de temps prédéterminée dépasse une deuxième valeur de seuil ; et si c'est le cas,
initier une opération de résolution de conflit d'identifiant de cellule physique.

**9.** Appareil selon la revendication 8, comprenant en outre un récepteur, le récepteur étant adapté pour recevoir des données de qualité de signal concernant une qualité de signaux entre l'UE (60) et la première station de base (20), chaque événement de taux d'erreur de blocs étant une instance du taux d'erreur de blocs dépassant la première valeur de seuil lorsque la qualité de signaux reçus au niveau de l'UE (60) est au-dessus d'une troisième valeur de seuil.

**10.** Appareil selon soit la revendication 8, soit la revendication 9, le processeur étant adapté en outre pour analyser les données de taux d'erreur de blocs pour déterminer une périodicité du nombre d'événements de taux d'erreur de blocs.

**11.** Appareil selon la revendication 10, le processeur étant adapté en outre pour surveiller le débit de données entre la première station de base (20) et l'UE (60), et étant adapté en outre pour analyser les données de taux d'erreur de blocs et les données de débit de données pour déterminer la périodicité du nombre d'événements de taux d'erreur de blocs.

**12.** Appareil selon l'une quelconque des revendications 8 à 11, les données de taux d'erreur de blocs concernant une pluralité de connexions entre une pluralité d'UE et la première station de base ; les données de qualité de signal concernant la qualité de signaux reçus par une pluralité d'UE ; et/ou les données de débit de données concernant le débit de données entre une pluralité d'UE et la première station de base.

**13.** Appareil selon l'une quelconque des revendications 8 à 12, étant un de la première station de base (20), une autre station de base (10, 30) dans le réseau de communication cellulaire, l'UE (60) ou un noeud distant.

**14.** Réseau de communication cellulaire incluant l'appareil selon l'une quelconque des revendications 8 à 13.

**Figure 1**

10,20,30

13,23,33    15,25,35

11,21,31

To/From
Core

Processor

Memory

17,27,37

19,29,39

**Figure 2**

40,50,60

43,53,63  45,55,65  41,51,61

Processor

Memory

47,57,67

**Figure 3**

First HeNB 20 collects operational data (S1)

First HeNB 20 analyses operational data to determine number of BLER events in a time period (S2)

Is number of BLER events > Threshold (S3)

No

Yes

Is a non-conflicting PCI available in PCI pool? (S4)

Yes

No

Is a non-colliding PCI available in PCI pool? (S6)

Yes

No

Reselect PCI to non-conflicting PCI (S5)

Reselect PCI to non-colliding PCI (S7)

Take operator dependent action (S8)

**Figure 4**

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015034775 A1

**Non-patent literature cited in the description**

- LTE Small Cell SON Test Cases. Qualcomm Technologies, Inc, 27 August 2015